Europäisches Patentamt

(19) European Patent Office

Office européen des brevets

(11) EP 0 670 172 B1

(12) **EUROPEAN PATENT SPECIFICATION**

(45) Date of publication and mention
of the grant of the patent:
**14.01.1998 Bulletin 1998/03**

(51) Int. Cl.⁶: **B01D 39/00**, B01D 39/16,
D01F 1/10

(21) Application number: **94301220.3**

(22) Date of filing: **22.02.1994**

(54) **Magnetic filter material**

Magnetisches Filtermaterial

Matériau filtrant magnétique

(84) Designated Contracting States:
**DE FR GB IE NL**

(43) Date of publication of application:
**06.09.1995 Bulletin 1995/36**

(73) Proprietor:
**KOREA INSTITUTE OF SCIENCE AND
TECHNOLOGY
Seoul (KR)**

(72) Inventors:
• **Kwon, Oh Kwan
Chamsil-dong, Songpa-ku, Seoul (KR)**
• **Choi, Ung Su
Kangnam-ku, Seoul (KR)**
• **Choi, Ki Young
Pohang-shi, Kyeongsangbuk-do (KR)**
• **Jung, Yoon Mo
Pohang-shi, Kyeongsangbuk-do (KR)**

(74) Representative:
**Newby, Martin John
JY & GW Johnson,
Kingsbourne House,
229-231 High Holborn
London WC1V 7DP (GB)**

(56) References cited:
WO-A-88/02413           US-A- 4 309 290

• **PATENT ABSTRACTS OF JAPAN vol. 4, no. 151
(C-028) 23 October 1980 & JP-A-55 098 909
(NAITO TAKESHI) 28 July 1980 & CHEMICAL
ABSTRACTS, vol. 93, no. 24, 15 December 1980,
Columbus, Ohio, US; abstract no. 221868,
'MAGNETIC SYNTHETIC FIBERS'**
• **DATABASE WPI Section Ch, Week 8432, Derwent
Publications Ltd., London, GB; Class A11, AN
84-197651 & JP-A-59 112 018 (TEIJIN K.K.) 28
June 1984 & CHEMICAL ABSTRACTS, vol. 101,
no. 14, 1 October 1984, Columbus, Ohio, US;
abstract no. 112348, 'MAGNETIC FIBER
MANUFACTURE'**
• **PATENT ABSTRACTS OF JAPAN vol. 5, no. 180
(C-079) 19 November 1981 & JP-A-56 105 717
(TOSHIBA CORP.) 22 August 1981**
• **CHEMICAL ABSTRACTS, vol. 79, no. 24, 17
December 1973, Columbus, Ohio, US; abstract
no. 137882, 'FERRITE-CONTAINING POLY(VINYL
ALCOHOL) FIBER COMPOSITE' & JP-A-47 046
845 (KURAKAY CO., LTD.) 27 November 1972**

Remarks:
The file contains technical information submitted
after the application was filed and not included in
this specification

## Description

### 1. Field of the Invention

The present invention relates to a magnetic filter material useful for a filtering system. More particularly, the present invention relates to a magnetic filter material which is made of a spun, fabric consisting of a polymer and magnetic substance, and which shows excellent filtration efficiency of metal impurities including especially iron components contained in gas or liquid.

### 2. Description Of The Prior Art

Conventionally, filtering systems refer to those which are installed in the flow path of fluids and act to remove impurities contained in the fluids. In these filtering systems, filter media have been used as an essential element.

A wide variety of materials have been used as such filter media, and these materials include synthetic fibers made of polymers such as polyethylene, polypropylene, etc., glass fibers, cottons, cellulose, iron wire, and pulp. These filter materials are conventionally manufactured in the form of woven fabrics, cartridges, nonwoven fabrics, pleated papers, and so forth.

For example, U.S. Patent No. 4,361,619 to Forsten discloses a composite filter felt comprised of an intimate blend of PTFE and glass fibers. However, the filter media of this type suffer from the disadvantage that the limited filtration area and porosity thereof reduce the filtration efficiency significantly.

Other types of filter media comprised of glass fibers, synthetic fibers, metal fibers, and so on, in the form of woven or nonwoven fabrics, have been known conventionally, but they have encountered similar problems causing reduced filtration efficiency.

As an attempt to enhance filtration efficiency, a method has been suggested to increase the thickness of filter media. This method could increase the filtration efficiency to some extent. However, if the filter media become larger in thickness, the pressure difference between the inlet and outlet of the media through which filtrates pass increases considerably owing to the media having only a limited capacity to accumulate contaminants, resulting in the filtrates being drawn back and the filter media being destroyed.

Filter media made of pulp materials have been widely used attributing to the large filtration area thereof. However, filter media of this type have a little trap which serves as a space for accumulating the impurities, unlike the woven or nonwoven fabrics made of synthetic fibers. For this reason, it may cause the drawback of a pressure difference, that is, an increase in the difference between the inlet and outlet pressures, and this degrades the filtration efficiency. These problems become serious when the filter material is used as an oil filter medium for a lubricating system. Lubricating oils usually contain an amount of high-molecular polymer additives, such as viscosity improvers and pour point depressants, in addition to impurities. Therefore, when circulating the oils through the filter medium, the pores of the medium may be clogged thereby resulting in an increased pressure difference between the inlet and the outlet of the medium, and in its lower filtration efficiency.

As mentioned above, the filtration efficiency of the filter media depends largely on the porosity thereof. That is, when the filtrate passes through a filter medium, a pressure difference between the inlet and the outlet is created at the outset depending on the porosity of the medium. The difference is likely to increase with the decrease in the porosity.

If the pressure difference becomes higher than a given level, the filtration efficiency is reduced abruptly causing various problems. For example, in the case of a by-pass system in which a portion of the filtrate is by-passed, the impurities are circulated along the flow path within the facility equipped with the system. Meanwhile, in the case of an all-pass system, the impurities contained in the filtrate are accumulated in the filter medium to increase the pressure difference. The greatly increased pressure difference leads to lower filtration efficiency and rupture of the filter media as well as shortness of the cyclic life.

A number of methods have been hitherto suggested in attempt to resolve the above prior art problems.

In an representative example of these methods, an electric charge is applied to a filter medium. For example, U.S. Patent No. 3,850,600 to Monsted, Jr. discloses a filter medium comprised of synthetic fibers in admixture with resin particles which were electrically charged by a mechanical working. Japanese Laid-Open Patent Publication No. (sho)59-145013 discloses a filter medium which comprises three kinds of polyesters having different melting points and to which an electric charge is applied by heating them under pressure.

Another approach is a method of removing impurities utilizing a magnetic field, as disclosed in U.S. Patent No. 4,193,866 to Slusarczuk et al. According to this method, suspended impurities are flocculated by adding magnetic ferrite powder, and the flocculated impurities are then separated off in the magnetic field.

By the utilization of these filter medium and systems, filtration efficiency could be more or less increased as compared with the conventional ones. However, the costs of the installation, manufacturing and maintenance thereof are too expensive.

Magnetic filter materials made of a spun fabric consisting of a polymer and a magnetic material are disclosed in JP-A-55098909 and JP-A-59112018.

We, the inventors of the present invention, have intensively conducted a wide range of experiments in order to solve the problems encountered in conventional filtering systems. As a result, the inventors have discovered that by spray-spinning- extruding a mixture of a polymer and a magnetic substance to provide a nonwoven fabric, and then magnetizing the resulting spinned nonwoven fabric, the filtration efficiency of the resulting filter material can be enhanced considerably, and could accomplish the present invention.

## SUMMARY OF THE INVENTION

It is therefore an object of the invention to provide a filter medium which shows an enhanced filtration efficiency against both liquid and gas.

It is another object of the invention to provide a filter medium which is of commercial interest attributing to its economically viable costs.

These and other objects of the invention will become apparent through reading the remainder of the specification, and can be accomplished by providing novel magnetic filter materials according to the invention, as set forth in claims 1 and 6.

## BRIEF DESCRIPTION OF THE DRAWING

The present invention will be described in greater detail with reference to the accompanying drawings, wherein:

Fig. 1 is a flow diagram illustrating a process for preparing of the magnetic filter medium according to the invention;

Fig. 2 is a schematic view showing the system of an air filter tester used in the invention;

Fig 3. is a schematic view showing the system of an oil filter tester used in the invention;

Fig 4. is a graph showing the change in the filtration efficiency of an oil filter with the lapse of filtration time; and

Fig 5. is a graph showing the change in the pressure difference of an oil filter with the lapse of filtration time.

## DETAILED DESCRIPTION OF THE INVENTION

According to the present invention, a magnetic filter, material is provided, which is made of a spray-spun, nonwoven fabric consisting of 40 to 99% by weight of a polymer and 1 to 60% by weight of a magnetic substance. If the magnetic substance contains in excess of above 60% by weight, the resulting mixture shows poor extrudability when spinning. On the contrary, if the magnetic substance contains an amount of below 1% by weight, the resulting filter medium cannot be magnetically charged. The preferred magnetic filter material according to the present invention is composed of 60 to 98% by weight of the polymer and 2 to 40% by weight of the magnetic substance.

The polymers used in the magnetic filter materials are known in the art and typically selected from the group consisting of the following polymers: polycarbonate, polyethylene, polypropylene, polyamide, polyimide, polyester, polytetrafluoroethylene, polyacrylonitrile. These materials are used in the form of powder, chip, and staple fibers. Preferably, the staple fibers are of 10 to 100 $\mu$m in diameter and of 5 to 100 mm in length.

It is preferred to use the following polymers:

- an aromatic polycarbonate having a molecular weight of 10,000 to 30,000;
- a high-density polyethylene having a molecular weight of 10,000 to 50,000 and a density of 0.94 to 0.96 g/cm$^3$;
- polytetrafluoroethylene having a molecular weight of 500,000 to 3,000,000;
- a polypropylene homopolymer having a molecular weight of 40,000 to 60,000 and a density of 0.94 g/cm$^3$;
- polyamide including nylon 6 having a molecular weight of 1,000 to 5,000 and nylon 6.6 having a molecular weight of 10,000 to 50,000;
- an aromatic polyimide having a molecular weight of 10,000 to 40,000;
- polyester having a molecular weight of 15,000 to 45,000; and
- polyacrylonitrile having a molecular weight of 20,000 to 50,000.

The magnetic substances useful in the invention are also known in the art. A suitable magnetic substance is selected from the group consisting of barium-ferrite such as barium oxide-ferric oxide, strontium ferrite such as strontium oxide-ferric oxide, and samarium-cobalt.

These magnetic substances may be in either of an anisotropic or isotropic structure. The magnetic substances of anisotropic structure are preferred because they have a more powerful magnetic property. The particle size of the magnetic substances is preferably 0.5 to 30 $\mu$m in diameter.

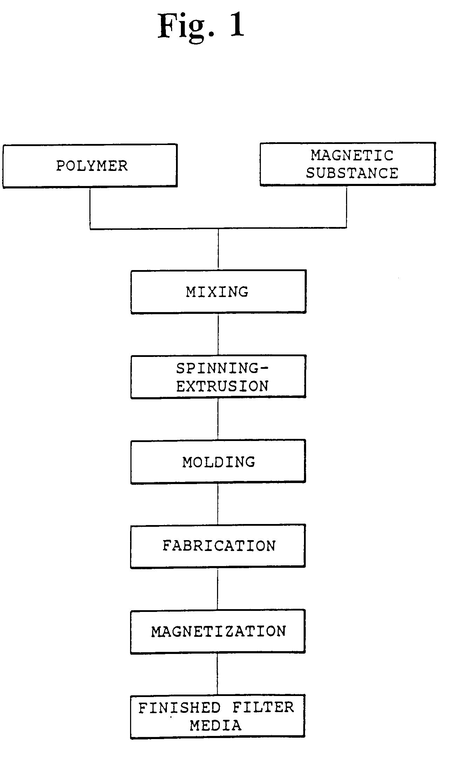

Referring now to Fig. 1, the process for preparing of a magnetic filter medium according to the invention will be described hereinbelow in detail.

According to the invention, the raw materials, a polymer and a magnetic substance, are mixed in a formulated amount. The resulting mixture is spray-spinning-extruded over melting temperature of its polymer within a spinning-extruder consisting of a receiving unit, extruder, and spray head according to a nonwoven fabric technique to form fibers. The size of the fibers thus spinning- extruded ranges from 0.01 to 2.0 mm in diameter. The spinned, nonwoven fabric is molded in the form of a sheet, mat or cylinder, and fabricated into a desired size to produce a filter medium. The filter medium is then subject to magnetization by placing it in a magnetizer, the TEM-WV81C-254 which is commercially available from Toei Industry Co., Japan, to produce the finished filter medium having the desired magnetic properties.

The magnetic filter medium thus obtained shows a magnetic force of 20 to 500 Gauss, and has a size of 0.1 to 20 mm in thickness and 0.1 to 200 $\mu$m in porosity.

The magnetic filter medium according to the invention has a porosity similar to that of the prior art woven or nonwoven fabrics filters made only of pure polymers, but shows highly enhanced filtration efficiency. Accordingly, the magnetic filter medium of the invention can be successfully used in various fields of industry, for example, as either an air or oil filter for automobiles and other industrial machinery, a liquid filter for treating industrial waste water and oil, and an air filter for dust-collecting or air-conditioning systems.

The magnetic filter medium of the invention shows excellent filtration efficiency, especially against metal impurities including iron, iron oxides and other metal dust.

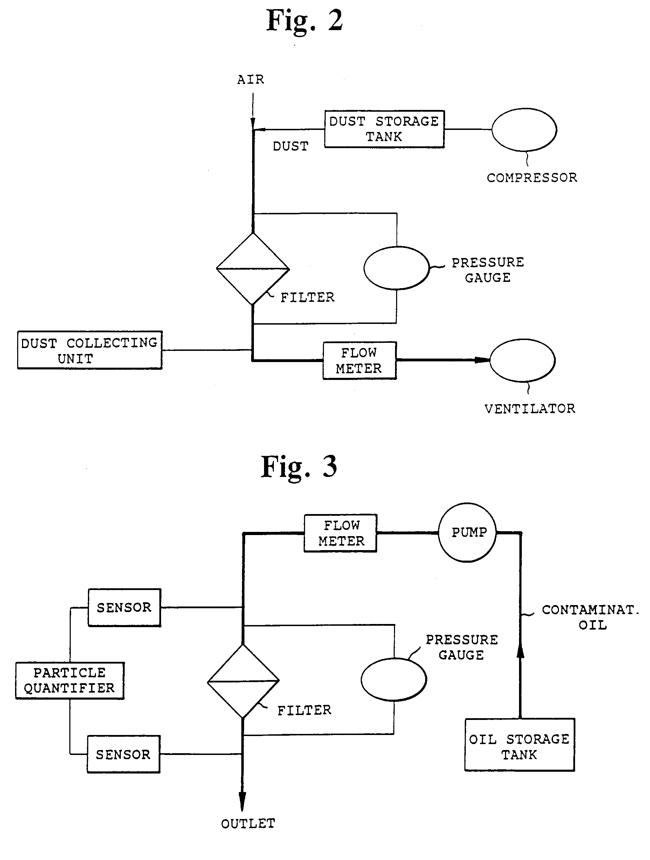

In the following examples, a number of air and/or oil-filtering tests are performed to evaluate the filtration efficiency of the magnetic filter material of the invention. The air-filtering tests are carried out in accordance with the gravimetric method in which filtration efficiency is measured based on the amount of dust particles to be collected. An example of a tester employed for this test is depicted in Fig. 2. A certain amount of dust is supplied into the tester from a storage tank by operating a compressor. The dust is then mixed with air. The air-containing dust is passed through a filter and a flow meter in turn, and finally removed with the aid of a ventilator. Along the flow path, a dust collecting unit is installed behind the filter and before the flow meter to evaluate the efficiency of the filter in leakage percentage.

To determine the leakage percentage, fly ash as the dust is added to air and the mixture passes through the filter at an air velocity of 2.1 m/min and 4.6 m/min for 2 hours. After measuring the weight of the fly ash having passed the filter, the leakage percentage of the filter used is calculated according to the following equation:

$$\text{Leakage Percentage} = \frac{\text{Weight of fly ash passing through the filter}}{\text{Weight of fly ash fed}} \times 100$$

The oil-filtering test is performed according to a standard testing method prescribed by the Society of Automotive Engineers (SAE HS J806 Method). The schematic diagram of the tester is shown in Fig. 3. In this tester, the contaminated oil is circulated into a filter via a flow meter, and then removed. A set of pressure gauges and a particle quantifier equipped with suitable sensors are installed, as depicted in Fig. 3, at the inlet and the outlet of the filter to measure both the pressure difference and the filtration efficiency.

To determine the filtration efficiency, iron particles as impurities were added to the vessel containing oil and mixed together. The contaminated oil is maintained at 80°C and circulated through the filter at a flow rate of 3 liter/min for 6 hours. Thereafter, the amount of the iron contained in the oil thus passed was measured by a particle quantifier PQ 90 which is commercially available from Analex Co., U.K. The filtration efficiency is calculated according to the following equation.

$$\text{Filtration efficiency (\%)} = \frac{I - I'}{I} \times 100$$

wherein, I is a particle index of the iron component which is initially contained in the oil; and I' is a particle index of the iron contained in the oil passing through the filter.

## DESCRIPTION OF THE PREFERRED EMBODIMENTS

The present invention will be illustrated in greater detail by way of the following examples. The examples are presented for illustrative purpose only and should not be construed as limiting the invention which is properly delineated in the claims.

Example 1

95 Percent by weight of polyethylene having a molecular weight of 20,000 in the form of a chip was mixed with 5% by weight of barium ferrite. The resulting mixture was spinning-extruded at a temperature of 170°C. The spinned, nonwoven fabric having a fiber diameter of 0.03 mm was molded and fabricated into a hollow cylinder having an outer diameter of 28 cm, an inner diameter of 23 cm and a height of 5 cm. The hollow cylinder was then magnetized in a magnetizer to produce an air filter specimen.

The specimen was compared with a control paper filter commercially available from Allied Singnal Inc., U.S.A. with respect to the leakage percentages thereof according to the procedures described above. The results are shown in Table 1 below.

Table 1

| | Leakage percentage (%) | |
|---|---|---|
| | Air velocity (m/min) | |
| | 2.1 | 4.6 |
| The invention | 0.24 | 0.35 |
| Control | 0.46 | 0.58 |

Example 2

90 Percent by weight of polypropylene having a molecular weight of 50,000 in the form of a chip and 10% by weight of strontium ferrite were mixed and spinning-extruded at a temperature of 190°C. The spinned, nonwoven fabric having a fiber diameter of 0.04 mm and an air permeability of 10 $m^3/min/m^2$ was molded and fabricated into a sheet form of 11.4 cm x 16.5 cm in size and then magnetized in a magnetizer to produce a filter specimen.

The specimen was compared with a control polypropylene filter having the same air permeability but without containing strontium ferrite with respect to the leakage percentages thereof according to the procedures described above. The results are shown in Table 2 below.

Table 2

| | Leakage percentage (%) | |
|---|---|---|
| | Air velocity (m/min) | |
| | 2.1 | 4.6 |
| The invention | 0.20 | 0.31 |
| Control | 0.35 | 0.47 |

Example 3

95 Percent by weight of polyester staple fibers (diameter: 30 $\mu$m; length: 10 mm) and 5% by weight of barium ferrite were mixed and spinning-extruded at a temperature of 270°C. The spinned, nonwoven fabric having a fiber diameter of 0.05 mm and an air permeability of 20 $m^3/min/m^2$ was molded and fabricated into a sheet form of 11.4 cm x 16.5 cm in size, and then magnetized in a magnetizer to produce a filter specimen.

The specimen was compared with a control polyester filter having the same air permeability but without containing barium ferrite with respect to the leakage percentages thereof according to the procedures described above. The results are shown in Table 3 below.

Table 3

|  | Leakage percentage (%) | |
| --- | --- | --- |
|  | Air velocity (m/min) | |
|  | 2.1 | 4.6 |
| The invention | 0.06 | 0.18 |
| Control | 0.12 | 0.40 |

Example 4

80 Percent by weight of powdered polytetrafluoroethylene having a molecular weight of 1,500,000 and 20% by weight of samarium-cobalt were mixed and spinning-extruded at a temperature of 350°C. The spinned, nonwoven fabric having a fiber diameter of 0.01 mm and an air permeability of 15 $m^3/min/m^2$ was molded and fabricated into a sheet form of 11.4 cm x 16.5 cm in size, and then magnetized in a magnetizer to produce a filter specimen

The specimen was compared with a control polytetrafluoroethylene filter having the same air permeability but without containing samarium-cobalt with respect to the leakage percentages thereof according to the procedures described above. The results are shown in Table 4 below.

Table 4

|  | Leakage percentage (%) | |
| --- | --- | --- |
|  | Air velocity (m/min) | |
|  | 2.1 | 4.6 |
| The invention | 0.08 | 0.25 |
| Control | 0.10 | 0.42 |

Example 5

70 Percent by weight of polyamide in the form of a chip (Nylon 6; molecular weight: 3,000) and 30% by weight of strontium ferrite were mixed and spinning-extruded at a temperature of 230°C. The spinned, nonwoven fabric having a fiber diameter of 0.02 mm was molded and fabricated into a hollow cylinder having an outer diameter of 8 cm, an inner diameter of 4 cm and a length of 4 cm, and then magnetized in a magnetizer to produce an oil filter specimen.

The specimen was compared with a control pleated paper oil filter commercially available from Dard Co., U.S.A. with respect to the filtration efficiencies thereof according to the procedures described above.

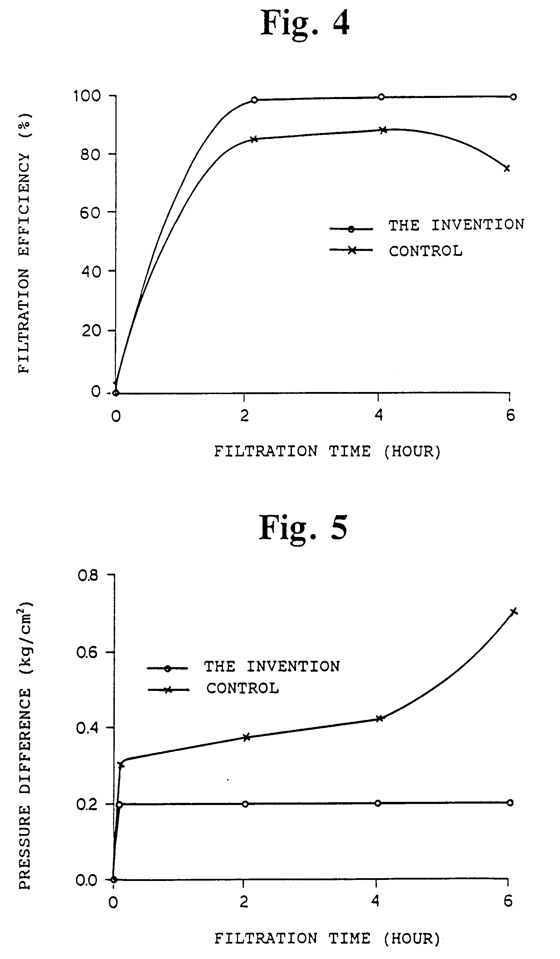

The results are illustrated in Figs. 4 and 5 which show the change in the filtration efficiency and the pressure difference with the filtration time, respectively.

The graphs of Figs. 4 and 5 confirm that the magnetic filter of the present invention has been considerably improved in its filtration efficiency while maintaining a low pressure difference compared with the conventional paper oil filter.

Example 6

80 Percent by weight of polyimide staple fibers (diameter: 40 μm; length: 20 mm) and 20% by weight of barium ferrite were mixed and spinning-extruded at a temperature of 300°C. The spinned, nonwoven fabric having a fiber diameter of 0.06 mm was molded and fabricated into a hollow cylinder of an outer diameter of 8 cm, an inner diameter of 4 cm and a height of 5 cm, and then magnetized in a magnetizer to produce an oil filter specimen.

The specimen was compared with a control pleated paper oil filter commercially available from Hyundai Motor Co., Korea with respect to the filtration efficiencies thereof by subjecting them to a filtration test for 6 hours according to the procedures described above. The results are shown in Table 5 below.

Table 5

|  | Pressure difference (Kg/cm$^2$) | Filtration efficiency (%) |
|---|---|---|
| The invention | 0.26 | 99.5 |
| Control | 0.70 | 73.8 |

Example 7

85 Percent by weight powdered polycarbonate having a molecular weight of 20,000 and 15% by weight of samarium-cobalt were mixed and spinning-extruded at a temperature of 250°C. The spinned, nonwoven fabric having a fiber size of 0.04 mm in diameter was molded and fabricated into a hollow cylinder having a size of 16 cm in outer diameter, 10 cm in inner diameter and 30 cm in length, and then magnetized in a magnetizer to produce an oil filter specimen.

The specimen was compared with a control tissue oil filter of 10,000 Power commercially available from Aekuk Industries, Co., Korea with respect to the filtration efficiencies thereof by subjecting them to a filtration test for 6 hours according to the procedures described above. The results are shown in Table 6 below.

Table 6

|  | Pressure difference (Kg/cm$^2$) | Filtration efficiency (%) |
|---|---|---|
| The invention | 0.34 | 96.7 |
| Control | 0.58 | 85.2 |

**Claims**

1.  A magnetic filter material consisting of 40 to 99% by weight of a polymer selected from the group consisting of polycarbonate, polyethylene, polypropylene, polyamide, polyimide, polyester, polytetrafluoroethylene and polyacrylonitrile and 1 to 60% by weight of a magnetic substance selected from the group consisting of barium ferrite, strontium ferrite, and samarium-cobalt, characterised in that the magnetic filter material is made of a spray-spun, nonwoven fabric having a pore size of 0.1 to 200 μm and fibres ranging from 0.01 to 2.0 mm in diameter prepared by using a spinning-extruder consisting of a receiving unit, extruder and spray head.

2.  The magnetic polymer filter material according to Claim 1, wherein the polymer is contained in an amount of 60 to 98% by weight and the magnetic substance is contained in an amount of 2 to 40% by weight.

3.  The magnetic filter material according to Claim 1 or 2, wherein the polycarbonate is an aromatic polycarbonate having a molecular weight of 10,000 to 30,000; the polyethylene is a high-density polyethylene having a molecular weight of 10,000 to 50,000 and a density of 0.94 to 0.96 g/cm$^3$; the polytetrafluoroethylene is polytetrafluoroethylene having a molecular weight of 500,000 to 3,000,000; the polypropylene is a polypropylene homopolymer having a molecular weight of 40,000 to 60,000 and a density of 0.94 g/cm$^3$; the polyamide is Nylon 6 having a molecular weight of 1,000 to 5,000 or Nylon 6.6 having a molecular weight of 10,000 to 40,000; the polyimide is an aromatic polyimide having a molecular weight of 10,000 to 40,000; the polyester is polyester having a molecular weight of 15,000 to 45,000; and the polyacrylonitrile is polyacrylonitrile having a molecular weight of 20,000 to 50,000.

4.  The magnetic filter material according to any one of Claims 1 to 3 wherein the filter material has a composition selected from the group consisting of:

    95% by weight of polyethylene and 5% by weight of barium ferrite;
    90% by weight of polypropylene and 10% by weight of strontium ferrite;
    95% by weight of polyester staple fiber and 5% by weight of barium ferrite;
    80% by weight of polytetrafluoroethylene and 20% by weight of samarium-cobalt;
    70% by weight of polyamide and 30% by weight of strontium ferrite;

80% by weight of polyimide and 20% by weight of barium ferrite; and

85% by weight of polycarbonate and 15% by weight of samarium-cobalt.

5. The magnetic filter material according to any one of Claims 1 to 4, wherein the magnetic filter material is molded in the form of sheets, mats or hollow cylinders and then magnetized.

6. A method of making a magnetic filter material, comprising mixing 40 to 99% by weight of a polymer selected from the group consisting of polycarbonate, polyethylene, polypropylene, polyamide, polyimide, polyester, polytetrafluoroethylene and polyacrylonitrile with 1 to 60% by weight of a magnetic substance selected from the group consisting of barium ferrite, strontium ferrite and samarium-cobalt, spray spinning-extruding said mixture over melting temperature of its polymer by using a spinning-extruder consisting of a receiving unit, extruder and spray head so that a spray-spun nonwoven fabric is prepared.

## Patentansprüche

1. Magnetisches Filtermaterial, bestehend aus 40 bis 99 Gew.-% eines Polymers aus der Gruppe Polycarbonat, Polyethylen, Polypropylen, Polyamid, Polyimid, Polyester, Polytetrafluorethylen und Polyacrylnitril und aus 1 bis 60 Gew.-% einer magnetischen Substanz aus der Gruppe Bariumferrit, Strontiumferrit und Samariumcobalt, dadurch gekennzeichnet, daß es sich dabei um einen mittels einem Spinnextruder mit Aufnahmeeinheit, Extruder und Sprühkopf hergestellten Sprühspinnvliesstoff mit einer Porengröße von 0,1 bis 200 μm und einem Faserdurchmesser von 0,01 bis 2,0 mm handelt.

2. Magnetisches Polymerfiltermaterial nach Anspruch 1, worin das Polymer in einer Menge von 60 bis 98 Gew.-% und die magnetische Substanz in einer Menge von 2 bis 40 Gew.-% enthalten ist.

3. Magnetisches Filtermaterial nach Anspruch 1 oder 2, worin es sich beim Polycarbonat um ein aromatisches Polycarbonat mit einem Molekulargewicht von 10.000 bis 30.000, beim Polyethylen um ein Polyethylenhoher Dichte mit einem Molekulargewicht von 10.000 bis 50.000 und einer Dichte von 0,94 bis 0,96 g/cm$^3$, beim Polytetrafluorethylen um Polytetrafluorethylen mit einem Molekulargewicht von 500.000 bis 3.000.000, beim Polypropylen um ein Polypropylenhomopolymerisat mit einem Molekulargewicht von 40.000 bis 60.000 und einer Dichte von 0,94 g/cm$^3$, beim Polyamid um Nylon 6 mit einem Molekulargewicht von 1.000 bis 5.000 oder um Nylon 6.6 mit einem Molekulargewicht von 10.000 bis 40.000, beim Polyimid um ein aromatisches Polyimid mit einem Molekulargewicht von 10.000 bis 40.000, beim Polyester um Polyester mit einem Molekulargewicht von 15.000 bis 45.000 und beim Polyacrylnitril um Polyacrylnitril mit einem Molekulargewicht von 20.000 bis 50.000 handelt.

4. Magnetisches Filtermaterial nach einem der Ansprüche 1 bis 3, wobei das Filtermaterial einer Zusammensetzung aus der Gruppe

95 Gew.-% Polyethylen und 5 Gew.-% Bariumferrit,

90 Gew.-% Polypropylen und 10 Gew.-% Strontiumferrit,

95 Gew.-% Polyesterstapelfaser und 5 Gew.-% Bariumferrit,

80 Gew.-% Polytetrafluorethylen und 20 Gew.-% Samariumcobalt,

70 Gew.-% Polyamid und 30 Gew.-% Strontiumferrit,

80 Gew.-% Polyimid und 20 Gew.-% Bariumferrit und

85 Gew.-% Polycarbonat und 15 Gew.-% Samariumcobalt

entspricht.

5. Magnetisches Filtermaterial nach einem der Ansprüche 1 bis 4, wobei das magnetische Filtermaterial zu Platten, Matten oder Hohlzylindern geformt und dann magnetisiert wurde.

6. Verfahren zur Herstellung eines magnetischen Filtermaterials, bei dem man 40 bis 99 Gew.-% eines Polymers aus der Gruppe Polycarbonat, Polyethylen, Polypropylen, Polyamid, Polyimid, Polyester, Polytetrafluorethylen und Polyacrylnitril mit 1 bis 60 Gew.-% einer magnetischen Substanz aus der Gruppe Bariumferrit, Strontiumferrit und Samariumcobalt mischt und unter Verwendung eines Spinnextruders mit Aufnahmeeinheit, Extruder und Sprühkopf bei einer über der Schmelztemperatur des jeweiligen Polymers liegenden Temperatur sprühspinnextrudiert, wobei man einen Sprühspinnvliesstoff erhält.

**Revendications**

1. Matériau de filtre magnétique constitué de 40 à 99% en poids d'un polymère choisi dans le groupe constitué par un polycarbonate, un polyéthylène, un polypropylène, un polyamide, un polyimide, un polyester, un polytétrafluoroéthylène et un polyacrylonitrile et de 1 à 60% en poids d'une substance magnétique choisie dans le groupe constitué par le ferrite de baryum, le ferrite de strontium et le samarium-cobalt, caractérisé en ce que le matériau de filtre magnétique est fait d'un tissu non tissé, filé par pulvérisation, ayant une porosité de 0,1 à 200 μm et des fibres allant de 0,01 à 2,0 mm de diamètre, préparé à l'aide d'une extrudeuse de filage constituée d'une unité de réception, d'une extrudeuse et d'une tête de pulvérisation.

2. Matériau de filtre polymère magnétique selon la revendication 1, dans lequel le polymère est contenu à raison de 60 à 98% en poids et la substance magnétique est contenue à raison de 2 à 40% en poids.

3. Matériau de filtre magnétique selon la revendication 1 ou 2, dans lequel le polycarbonate est un polycarbonate aromatique ayant une masse moléculaire de 10 000 à 30 000; le polyéthylène est un polyéthylène haute densité ayant une masse moléculaire de 10 000 à 50 000 et une masse volumique de 0,94 à 0,96 g/cm$^3$; le polytétrafluoroéthylène est un polytétrafluoroéthylène ayant une masse moléculaire de 500 000 à 3 000 000; le polypropylène est un homopolymère de polypropylène ayant une masse moléculaire de 40 000 à 60 000 et une masse volumique de 0,94 g/cm$^3$; le polyamide est du Nylon 6 ayant une masse moléculaire de 1 000 à 5 000 ou du Nylon 6.6 ayant une masse moléculaire de 10 000 à 40 000; le polyimide est un polyimide aromatique ayant une masse moléculaire de 10 000 à 40 000; le polyester est un polyester ayant une masse moléculaire de 15 000 à 45 000; et le polyacrylonitrile est un polyacrylonitrile ayant une masse moléculaire de 20 000 à 50 000.

4. Matériau de filtre magnétique selon l'une quelconque des revendications 1 à 3, dans lequel le matériau de filtre possède une composition choisie dans le groupe constitué par:

   95% en poids de polyéthylène et 5% en poids de ferrite de baryum;
   90% en poids de polypropylène et 10% en poids de ferrite de strontium;
   95% en poids de fibre de polyester discontinue et 5% en poids de ferrite de baryum;
   80% en poids de polytétrafluoroéthylène et 20% en poids de samarium-cobalt;
   70% en poids de polyamide et 30% en poids de ferrite de strontium;
   80% en poids de polyimide et 20% en poids de ferrite de baryum; et
   85% en poids de polycarbonate et 15% en poids de samarium-cobalt.

5. Matériau de filtre magnétique selon l'une quelconque des revendications 1 à 4, dans lequel le matériau de filtre magnétique est moulé sous forme de feuilles, de mats ou de cylindres creux, puis aimanté.

6. Procédé de fabrication d'un matériau de filtre magnétique, comprenant les étapes consistant à mélanger 40 à 99% en poids d'un polymère choisi dans le groupe constitué par un polycarbonate, un polyéthylène, un polypropylène, un polyamide, un polyimide, un polyester, un polytétrafluoroéthylène et un polyacrylonitrile avec 1 à 60% en poids d'une substance magnétique choisie dans le groupe constitué par le ferrite de baryum, le ferrite de strontium et le samarium-cobalt, à soumettre ledit mélange à une extrusion-filage par pulvérisation au-dessus de la température de fusion de son polymère, en utilisant une extrudeuse de filage constituée d'une unité de réception, d'une extrudeuse et d'une tête de pulvérisation, pour préparer un tissu non tissé filé par pulvérisation.

# Fig. 1

```
┌─────────────────┐        ┌─────────────────┐
│     POLYMER     │        │    MAGNETIC     │
│                 │        │    SUBSTANCE    │
└─────────────────┘        └─────────────────┘
         │                          │
         └────────────┬─────────────┘
                      │
            ┌─────────────────┐
            │     MIXING      │
            └─────────────────┘
                      │
            ┌─────────────────┐
            │    SPINNING-    │
            │    EXTRUSION    │
            └─────────────────┘
                      │
            ┌─────────────────┐
            │     MOLDING     │
            └─────────────────┘
                      │
            ┌─────────────────┐
            │   FABRICATION   │
            └─────────────────┘
                      │
            ┌─────────────────┐
            │  MAGNETIZATION  │
            └─────────────────┘
                      │
            ┌─────────────────┐
            │ FINISHED FILTER │
            │      MEDIA      │
            └─────────────────┘
```

# Fig. 2

# Fig. 3

# Fig. 4

# Fig. 5